# EUROPÄISCHE PATENTSCHRIFT

(11) **EP 1 182 066 B1**
(45) Veröffentlichungstag und Bekanntmachung des Hinweises auf die Patenterteilung: **29.09.2004**
(21) Anmeldenummer: 01118506.3
(22) Anmeldetag: 01.08.2001
(51) Int. Cl.: B60J 1/20, B60J 3/02

(54) **Fahrzeug mit Sonnenschutzrollo im Dach**
Vehicle with roller blind in the roof
Véhicule avec store à enrouleur dans le toit

(30) Priorität: 16.08.2000 DE 10040624
(43) Veröffentlichungstag der Anmeldung: 27.02.2002
(73) Patentinhaber: BOS GmbH & Co. KG, 73760 Ostfildern (DE)
(72) Erfinder: Schlecht, Werner P., 71765 Vaihingen / Enz (DE); Walter, Herbert, 73061 Ebersbach (DE)
(74) Vertreter: Patentanwälte Rüger, Barthelt & Abel

(56) Entgegenhaltungen:
- WO-A-97/10963
- DE-A- 2 815 821
- DE-A- 4 129 689
- DE-A- 19 619 474

## Beschreibung

Die Erfindung befrifft ein Kraftfahrzeug gemäß Anspruch 1 und ein Sonnenschutzzollo gemäß Anspruch 2. Ein Kraftfahrzeug und ein Sonnenschutzsollo dieser Art sind in DE 2815821 A1 offenbart. In diesem Dokument ist als Ersatz für die klappbare Sonnenblende an Frontscheiben von Kraftfahrzeugen ein Rollo bekannt. Zu dem Rollo gehört eine im Dach vor dem Stahlschiebedach drehbar gelagerte Wickelwelle, an der mit einer Kante eine Rollobahn befestigt ist. Die Breite der Rollobahn entspricht der Breite der üblichen klappbaren Sonnenblenden, d.h. die Breite ist geringer als die Breite der Frontscheibe.

Die Rollobahn ist an einer ihrer von der Wickelwelle abliegenden Kante mit einem Versteifungsstab versehen. An dem Versteifungsstab sind außerdem Anlagepuffer und Griffe vorhanden, um die Vorderkante der Rollobahn an der Fensterinnenseite abzustützen und um die Rollobahn zu bewegen.

Damit die Rollbahn in der jeweiligen Auszugsstellung gehalten wird und auch um die Vorderkante gegen die Scheibe anzupressen, ist ein Federband vorgesehen, das mit einem Ende des Versteifungsstabes starr verbunden ist. Die Bandfeder läuft durch den Schlitz in der Dachvorderkante, durch den auch die Rollobahn austritt und verschwindet im Dachinnenraum. Dort ist die Bandfeder an zwei voneinander beabstandeten ortsfesten Stellen geführt. Die Führung geschieht mit Hilfe von Langlöchern in der Bandfeder und entsprechenden im Dach verankerten Bolzen oder Stiften.

Um die bekannte Sonnenblende auszufahren, muss der Benutzer die Griffe am Verstärkungsstab erfassen und mit deren Hilfe die Rollobahn auf die gewünschte Höhe ausziehen. Dabei wird auch die Bandfeder mit aus dem Dach herausgezogen. Aufgrund der Reibung der Bandfeder in den Führungen wird sie an der vom Benutzer gewählten Stelle reibschlüssig abgebremst, damit die in der Wickelwelle vorhandene Feder, die im Sinne eines Aufwickelns der Rollobahn wirksam ist, die Rollobahn zunächst nicht wieder in das Dach zurückzieht.

Zum Einfahren der Sonnenblende muss der Benutzer mit Hilfe der Griffe an dem Versteifungsstab die Bandfeder in das Dach zurückschieben, wobei gleichzeitig die Feder der Wickelwelle, die Wickelwelle im Sinne eines Aufwickelns der Rollobahn in Umdrehungen versetzt.

Eine weitere Sonnenblendeinrichtung ist aus der WO 97/10963 bekannt. In zwei koaxial nebeneinander angeordneten zylindrischen Gehäusen ist je eine Wickelwelle drehbar gelagert. Mit jeder dieser Wickelwellen ist an einer Kante eine Rollobahn verbunden, die mit Hilfe von rinnenartig profilierten Federstäben ausgesteift wird. Die Rinne verläuft in Längsrichtung, so dass das Profil steif ist, solange die Rinne nicht flachgedrückt wird.

Ausgehend hiervon ist es Aufgabe der Erfindung ein Fahrzeug mit einem fernbetätigbaren Sonnenschutz- oder Fensterrollo zu schaffen, dessen wesentliche Teile im Dach untergebracht sind, bzw. ein Sonnenschutz- oder Fensterrollo zu schaffen, das fernbetätigbar ist und überwiegend in dem Dach eines Kraftfahrzeugs angeordnet ist.

Diese Aufgabe wird erfindungsgemäß mit dem Fahrzeug mit den Merkmalen des Anspruches 1 bzw. dem Fensterschutzrollo mit den Merkmalen des Anspruches 2 gelöst.

Bei Fahrzeugen besteht das Dach in aller Regel aus der Dachaußenhaut, die Bestandteil der Rohkarosserie ist, und dem Dachhimmel, mit dem die aussteifenden Strukturen der Karosserie im Dachbereich optisch verdeckt werden. Bei dem neuen Fensterrollo, bzw. Fahrzeug, wird dieser Dachinnenraum zur Unterbringung aller wesentlicher mechanischer Teile des Fensterrollos verwendet. Insbesondere ist dort auch ein Kraftantrieb vorhanden, der es gestattet, das Rollo fernbetätigt ein und aus zufahren. Beispielsweise kann der Fahrer auf diese Weise ein von ihm nicht erreichbares Rollo betätigen.

Ein wesentlicher Vorteil der neuen Anordnung besteht darin, dass der Auslaufschlitz für das Rollo sich oben im Fahrzeug befindet, womit keine Gefahr gegeben ist, dass irgendwelche Teile unfreiwillig durch den Schlitz gelangen können. Eine solche Gefahr besteht hingegen bei Fensterschutzrollos oder Heckscheibenrollos, die in Hutablage bzw. darunter installiert sind. Der Auslaufschlitz öffnet sich nach oben, wodurch leicht Gegenstände durch den Schlitz hindurch fallen können.

Darüber hinaus ist bei dem erfindungsgemäßen Fensterschutzrollo nicht notwendigerweise eine Abdeckschiene für den Auslaufschlitz erforderlich.

Da die Rollounterkante oder Vorderkante, die beim Ausfahren vorauseilt, von oben kommt, wird eine besonders günstige Abschattungswirkung im Fahrzeug erreicht. Die störende Sonneneinstrahlung geschieht von oben kommend, wodurch die Abschattungswirkung am effizientesten ist, wenn der obere Teil des betreffenden Fensters abgeschattet werden kann. Der untere Teil des Fensters kann offen bleiben, was die Sicht durch das betreffende Fenster verbessert, verglichen mit einem Rollo, dass von unten kommt und immer vollständig ausgefahren werden muss, auch dann, wenn nur eine Abschattung im oberen Fensterbereich benötigt wird.

Das Dach des Fahrzeugs ist bei der erfindungsgemäßen Lösung formstabil. Es kann integraler Bestandteil der Rohkarosserie sein, kann aber auch ein Hardtop darstellen, das von dem Unterteil der Karosserie abzunehmen ist. Die erfindungsgemäße Rollolösung eignet sich wegen der Unterbringung im Dach auch insbesondere für Sportfahrzeuge mit Hardtop.

Das Fenster, das mit dem erfindungsgemäßen Fensterschutzrollo abgeschattet werden kann, ist vorzugsweise ein Heckfenster, weil durch dieses auch bei steilstehender Sonne sehr viel Licht in den Fahrgastinnenraum gelangt und dort zu einer starken Aufheizung führt. Die Heckscheibe muss bei der neuen Lösung jedoch nicht notwendiger Weise starr und fest mit dem Dach verbunden sein. Es kann sich auch um ein Heckfenster handeln, das sich in einer Heckklappe beispielsweise eines Kombi-Pkw oder Geländefahrzeugs befindet.

Weitere Fenster, an denen die neue Fensterschutzrollolösung Einsatz finden kann, sind die Frontscheibe, um dort die klassische klappbare Sonnenblende zu ersetzen, und selbstverständlich auch Seitenfenster, und zwar sowohl Seitenfenster, die unbeweglich sind, als auch Seitenfenster an Seitentüren.

Die Rollobahn kann aus einem in sich schubsteifen Material bestehen oder aus einer verhältnismäßigen dünnen Folie, die ein Aufwickeln mit geringem Radius zulässt.

Die in sich schubsteife Rollbahn bietet den Vorteil, dass sie weder von außen sichtbare Schubglieder noch eine Wickelwelle erfordert, sondern im aufgespannten Zustand im Dachinnenraum unterzubringen ist.

Bei geringer Bombierung des Daches in Richtung quer zur Rollobahn eignet sich eine Wickelwelle, auf der die Rollobahn aufzuwickeln ist. Hierdurch wird in Bewegungsrichtung der Rollobahn wenig Platz im Dach beansprucht.

Eine andere Variante, die bei starker Bombierung des Daches möglich ist, besteht in einer Rollobahn, die an der Hinterkante, d.h. an jener Kante, die ständig im Dach verbleibt, mit Zugmitteln versehen ist, die getrennt auf voneinander beabstandete Wickelscheiben aufgewickelt werden. Die Wickelscheibenlösung ist auch dann verwendbar, wenn eine gerade Wickelwelle mit ausreichender Breite im Dachraum in der starken Krümmung des Dachhimmels nicht unterzubringen wäre. Denkbar ist es schließlich auch noch, die Rollobahn leporelloartig zu falten und in einem entsprechenden Kasten unterzubringen.

Ein Durchhängen einer weichen dünnen Rollobahn läßt sich vermeiden, wenn die Rollobahn über die Breite mit Spriegeln ausgesteift ist.

Da bei den modernen Karosserieformen üblicherweise ein beträchtlicher Einzug im Dachbereich vorhanden ist, sind zwangsläufig die Fenster in der Nähe der Dachkante schmäler als im Bereich der Unterkante. Um eine maximale Abschattungswirkung zu erhalten, ist deswegen der Zuschnitt der Rollobahn vorzugsweise rechteckig mit einer Breite entsprechend der kleinsten Breite des Fensters.

Die Wickelwelle bzw. die Wickelscheiben des Fensterschutzrollos können mit Hilfe eines Federmotors in Aufwickelrichtung vorgespannt sein oder mit Hilfe des Elektromotors angetrieben werden.

Um die Vorderkante von Rollobahnen zu bewegen, die in sich nicht schubsteif sind, ist wenigstens ein Schubglied vorhanden, das an der Vorderkante angreift. Das Schubglied ist zumindest in jenem Bereich, in dem es aus dem Auslaufschlitz vorgeschoben wird, hinreichend biegesteif um die Rollobahn ohne Führungsschienen tragen zu können. Das Schubglied wird entweder von dem Elektromotor angetrieben oder durch eine Feder, die im Ausschubsinne wirkt, wenn die Wickelwelle bzw. die Wickelscheiben elektrisch angetrieben sind.

Im übrigen sind Weiterbildungen Gegenstand von Unteransprüchen, wobei auch solche Kombinationen von Unteransprüchen als mit geoffenbart angesehen werden, die durch kein Ausführungsbeispiel erläutert sind.

In der Zeichnung sind Ausführungsbeispiele des Gegenstandes der Erfindung dargestellt. Es zeigen:
- Fig. 1: ein Fahrzeug in einem Längsschnitt unter Veranschaulichung des im Dach eingebauten erfindungsgemäßen Fensterrollos im ausgezogenen Zustand,
- Fig. 2: das Fensterrollo nach Fig. 1 zusammen mit dem Fahrzeug, in einer perspektivischen Ausschnittsdarstellung,
- Fig. 3: das Fensterrollo nach Fig. 2 in einer Ansicht von oben, ohne die Fahrzeugkarosserie,
- Fig. 4: ein anderes Ausführungsbeispiel des Fensterrollos in einer Darstellung ähnlich Fig. 2,
- Fig. 5: ein Fensterrollo mit einer schubsteifen Rollobahn, in einer Darstellung ähnlich Fig. 2,
- Fig. 6: ein Fensterrollo mit einer durch Spriegel ausgesteiften bzw. aus Lamellen bestehenden Rollobahn, in einer darstellungsähnlichen Fig. 2, und
- Fig. 7: ein Fensterrollo mit einer leporelloartig gefalteten Rollobahn, in einer darstellungsähnlichen Fig. 2.

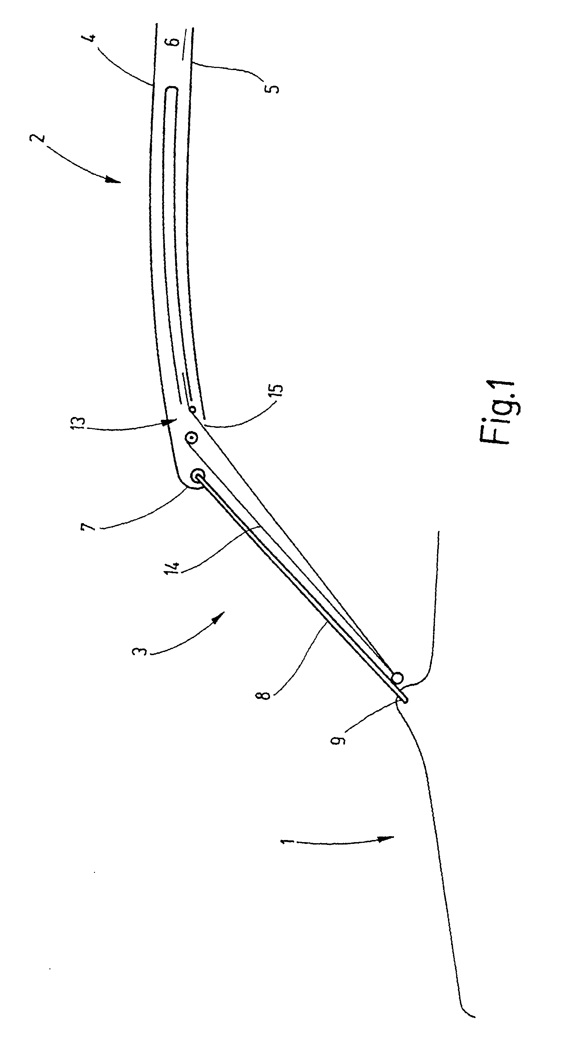

Fig. 1 zeigt einen stark vereinfachten Ausschnitt aus einer längs geschnittenen Karosserie 1 eines Pkw. In dem Längsschnitt sind ein Fahrzeugdach 2 sowie ein Heckfenster 3 zu erkennen. Das Fahrzeugdach 2 setzt sich aus einer äußeren Blechhaut 4 einer Fahrzeugkarosserie und einem von der Innenseite an der Blechhaut befestigten Dachhimmel 5 zusammen. Zwischen der Blechhauthaut 4 und dem Dachhimmel 5 ist ein Dachinnenraum 6 begrenzt, der bis zu einer Dachhinterkante bzw. Fensteroberkante 7 reicht. An der Dachhinterkante 7 ist mit einem Fenstergummi oder sonstwie eine Heckscheibe 8 befestigt, die bis zu einer unteren Fensterbrüstung 9 reicht, und dort ebenfalls befestigt ist.

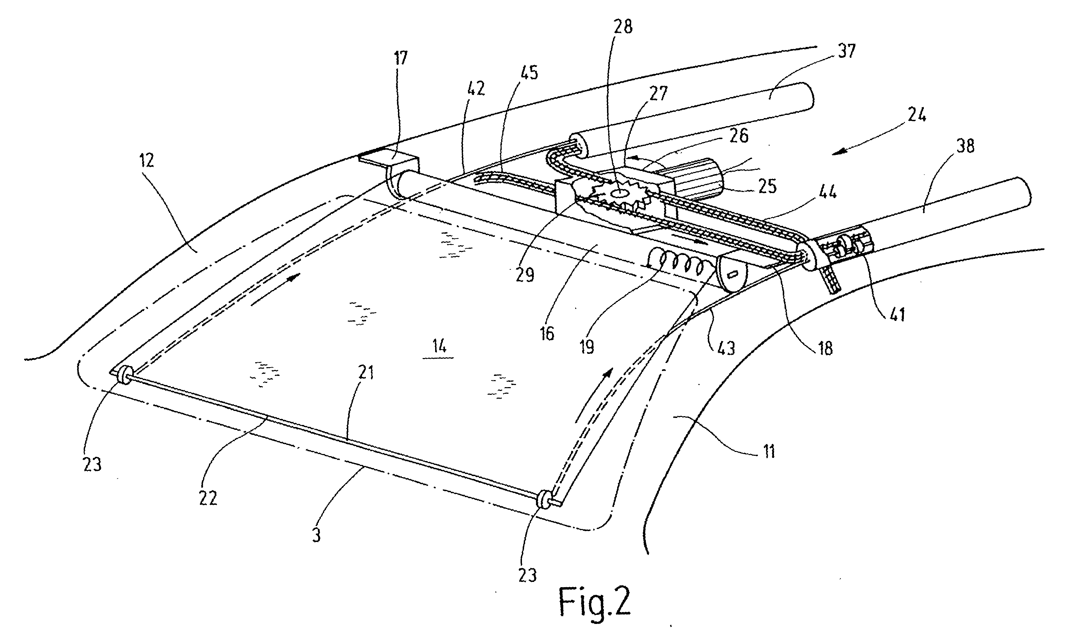

Seitlich wird das Heckfenster 3 wie Fig. 2 erkennen läßt, durch zwei C-Säulen 11 und 12 begrenzt. An die beiden C-Säulen 11 und 12 schließen sich in bekannter Weise nicht weiter gezeigte Seitenfenster an.

Die Feinstruktur des Fahrzeugdachs mit den seitlichen Dachholmen und eventuellen Querverstrebungen ist nicht veranschaulicht, da es auf diese für das Verständnis der Erfindung nicht ankommt.

Innerhalb des Dachinnenraumes 6 ist ein Fensterrollo 13 untergebracht, dessen Rollobahn 14 in Fig. 1 im ausgezogenen Zustand veranschaulicht ist.

Die Rollobahn 14 führt durch einen Rolloschlitz 15, der in dem Dachhimmel 5 ausgebildet ist nach außen. Der Dachhimmel 5 ist zu diesem Zweck vorzugsweise als eigenformstabiles Teil ausgeführt, damit er im Bereich des Rolloschlitzes 15 nicht nach unten durchhängt. Alternativ kann der Rolloschlitz 15 auch von zwei Rändern begrenzt sein, von denen der eine zu dem Dachhimmel 5 gehört, während der andere unabhängig davon eine an der Karosserie verankerte Blende ist, die an die Heckscheibe 8 angrenzt.

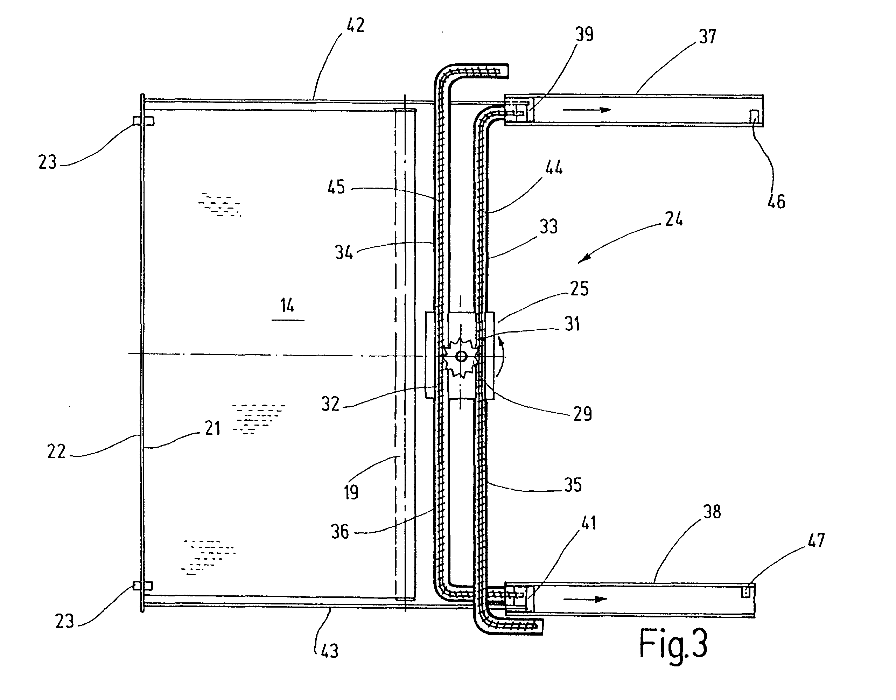

Zur Erläuterung des Aufbaus des Fensterrollos wird nun zusätzlich auf die Figuren 2 und 3 Bezug genommen. In Figur 2 ist die Blechhaut scheinbar durchsichtig gezeigt.

Um die Rollobahn 14 des Fensterrollos 13 nach Fig. 1 bei Nichtgebrauch in dem Dachinnenraum 6 zu verstauen, ist eine Wickelwelle 16 vorgesehen, die sich quer zur Fahrzeugslängserstreckung und damit im wesentlichen parallel zu der Fensteroberkante 7 des Heckfensters 3 erstreckt und die im Dachinnenraum 6 mittels zwei Lagerflansche 17 und 18 um eine Horizontalachse drehbar gelagert ist. Die Flansche 17 und 18 sind zum Beispiel an der Unterseite der Blechhaut 4 in nicht veranschaulichter Weise befestigt.

Die Wickelwelle 16 besteht aus einem Rohr, in dessen Inneren eine Schraubenfeder 19 untergebracht ist, die einends mit der Wickelwelle 16 fest verbunden ist und die anderenends an dem Lagerflansch 18 verankert ist. Die Schraubenfeder 19 dient als Federmotor, um die Wickelwelle 16 in einer Drehrichtung entsprechend dem Aufwickeln der Rollobahn 14 vorzuspannen.

Die übrigen Lagerteile zum Lagern der Wickelwelle 16 sind, um die Figur nicht mit Details zu überladen, weggelassen.

An der Wickelwelle 16 ist mit einer Kante die Rollobahn 14 befestigt, die aus einer dünnen Folie besteht. Die Rollobahn 14 hat einen rechteckigen Zuschnitt, mit einer Breite entsprechend der Länge des Rolloschlitzes 15, bzw. entsprechend der Breite der Fensteroberkante 7 des Heckfensters 3.

Das Material für die Rollobahn 14 ist entweder lichtundurchlässig oder ist in sich lichtdurchlässig, schwächt aber die durchtretende Lichtmenge ab. Im Falle eines im wesentlichen lichtundurchlässigen Materials ist die Folie mit einer Vielzahl feiner gleichverteilter Löcher versehen.

Die Rollobahn 14 bildet eine von der Wickelwelle 16 abliegende Kante 21, die wegen des rechteckigen Zuschnitts zu der Wickelwelle 16 parallel verläuft. An dieser Kante 21 ist ein sich über die gesamte Breite erstreckender Versteifungsstab 22 befestigt.

Der Versteifungsstab 22 trägt in der Nähe seiner Enden Gleiter 23, die auch als Rollen ausgebildet sein können, um eine kratzfreie Führung an der Innenseite der Heckscheibe 8 zu ermöglichen, ohne die Gefahr einer Beschädigung der üblicherweise an der Innenseite der Heckscheibe 8 angebrachten Heizdrähte.

Zum Fernbetätigen Ein- und Ausfahren der Rollobahn 14 ist ein kraftbetriebenes Antriebssystem 24 vorhanden, das sich ebenfalls in dem Dachinnenraum befindet und zu dem unter anderem auch die bereits erwähnte Schraubenfeder 19 gehört. Ferner umfaßt das Antriebssystem 24 einen Getriebemotor 25, mit einem permanent erregten Gleichstrommotor und einem Getriebe 26. Der Getriebemotor ist über eine bekannte elektrische Steuereinrichtung, die wahlweise von dem Benutzer betätigt werden kann, mit dem Bordnetz des Kraftfahrzeugs verbunden ist.

Das Getriebe 26 weist ein Gehäuse 27 auf, in dem eine Getriebeausgangswelle 28 drehbar gelagert ist, die drehfest ein Zahnrad 29 trägt.

Tangential zu dem Zahnrad 29 verlaufen an diametral gegenüberliegenden Seiten durch das Getriebegehäuse 27 zwei Führungskanäle 31 und 32. Mit den Führungskanäle 31 und 32 fluchten im Wesentlichen starre Führungshüllen 33, 34, 35 und 36, die einends fest mit dem Getriebegehäuse 27 verbunden sind.

Die Führungshülle 33 führt zu einem Führungsrohr 37, das in einem kurzen Abstand von dem Rolloschlitz 15 beginnt und im wesentlichen parallel zur Längserstreckung des Fahrzeugs ausgerichtet ist. Es verläuft in dem Dachinnenraum 6.

Die Führungshülle 36 hingegen verbindet das Getriebegehäuse 27 mit einem Führungsrohr 38, das ebenfalls in einem kurzen Abstand von dem Rolloschlitz 15 beginnt und in Richtung parallel zu Fahrzeugslängserstreckung ausgerichtet in dem Dachinnenraum befestigt ist. In den beiden Führungsrohren 37 und 38 ist jeweils ein Führungsschlitten 39 bzw. 41 längsverschieblich geführt.

Der Führungsschlitten 39 ist über einen federelastisch biegsamen verhältnismäßig steifen Draht, der eine Führungsund Schubstange 42 bildet mit dem zugeordneten Ende der Verstärkungsstange 22 unlösbar verbunden. Eine weitere Führungs- und Schubstange 43, die ebenfalls aus einem federelastischen verhältnismäßig steifen Grundmaterial besteht, verbindet den Führungsschlitten 41 mit dem anderen Ende der Versteifungsstange 22. Die beiden Führungs- und Schubstangen 42 und 43 sind in Schub- und Druckrichtung fest mit der Versteifungsstange 22 und dem zugehörigen Schlitten 39 bzw. 41 verbunden.

Die getriebliche Verbindung zwischen den beiden Führungsschlitten 39 und 41 mit dem Getriebemotor 25 geschieht über drucksteife linienförmige Schubglieder 44 und 45. Die beiden Schubglieder 44 und 45 können beispielsweise sogenannte SU-flexwellen™ sein, die mit den Führungshüllen 33, ... 36 eine Art Bowdenzug bilden.

Eine SU-flexwelle™ besteht aus einem Kern, in Gestalt einer Litze, mit Kreisquerschnitt und einer Drahtspirale, die auf dem Kern eine ein- oder mehrgängige Schraube bildet. Die Abstände zwischen den einzelnen benachbarten Windungen des Drahtes sind größer als der Drahtdurchmesser, wodurch sich auf der Außenseite des Kerns eine schraubenförmig verlaufende Verzahnung ergibt. Die SU-flexwelle™ bildet eine Art schraubenförmig verlaufender Zahnstange, die sich biegsam und drucksteif in den Führungshüllen 33 ... 36 verhält.

Die Verzahnung des Zahnrades 29, die in den Figuren vergröbert gezeigt ist, ist tatsächlich an die Zahnteilung der linienförmigen Schubglieder 44 und 45 angepasst, und die Führungen in dem Getriebegehäuse 29 sorgen dafür, dass die Schubglieder 44, 45 ständig mit dem Zahnrad 29 in Eingriff gehalten werden.

Das Schubglied 44 ist zug- und druckfest mit dem Schlitten 39 verbunden. Es führt von dort durch die Führungshülle 33 in das Getriebegehäuse 27 und von hier aus weiter in die Führungshülle 35, die als Speicherrohr für den jeweils überstehenden Teil des Schubgliedes 44 dient.

Das Schubglied 45 dagegen ist zug- und druckfest mit dem Schlitten 41 verbunden, führt durch die Führungshülle 36 zu dem Getriebegehäuse 27 und von dort weiter in de Führungshülle 34, die ebenfalls als Speicherrohr dient.

Die Funktionsweise des beschriebenen Fensterrollos ist wie folgt:

Im eingefahrenen oder Ruhezustand ist die Rollobahn 14 unter der Wirkung der Schraubenfeder 19 auf der Wickelwelle 16 aufgewickelt. Die vordere Kante 21 der Rollobahn 14 kann in dieser Stellung entweder im Rolloschlitz 15 stehen oder hinter dessen Rand zurückgezogen sein.

In der Ruhestellung stehen die Führungsschlitten 39 und 41 in einer solchen Stellung, in der die Führungs- und Schubstangen 42 und 43 ebenfalls in die Führungsrohre 37 und 38 zurückgezogen sind. Die Länge der Führungsrohre 37 und 38 ist entsprechend bemessen, damit in jeder Betriebsstellung die Schlitten 39 und 41 in den jeweiligen Führungsrohren 37 und 38 geführt sind.

Die beiden biegsamen Schubglieder 44 und 45 sind vorgeschoben, d.h. ihr freies Ende befindet sich in einem geringen Abstand von dem Antriebszahnrad 29.

Diese Endlage kann mechanisch festgelegt werden, indem in den Führungsrohren 37 und 38 Anschläge, beispielsweise die Anschläge 46 und 47 angebracht sind.

Wenn der Benutzer ausgehend von der Ruhestellung des Fensterrollos 13 die Rollobahn 14 ausfahren will, betätigt er einen entsprechenden Schalter im Fahrzeug, wodurch der Getriebemotor 25 Strom erhält. Der Motor setzt das Ausgangszahnrad 29 in Gang, das seinerseits wegen des kämmenden Eingriffs mit den flexiblen Schubgliedern 44 und 45 die beiden Führungsschlitten 39 und 41 in Richtung auf das der Heckscheibe 3 benachbarte Ende bewegt.

Durch diese Bewegung der beiden Führungsschlitten 39 und 41 werden die Führungs- und Schubstangen 42 und 43 durch den Rolloschlitz 15 nach außen geschoben. Sie nehmen hierbei die Vorderkante 21 der Rollobahn 14 mit und bewegen diese zu der Innenseite der Heckscheibe 8. Sobald dort die beiden mit der Vorderkante 21 verbundenen Gleiter 23 an der Innenseite der Heckscheibe 8 anstoßen, bewegt sich zwangsläufig die Vorderkante 21 entlang der Innenseite der Heckscheibe 8 von der Dachoberkante 7 nach unten.

Die federelastisch und hinreichenden steifen Führungs-und Schubstangen 42 und 43 halten dabei in jeder Betriebsstellung die Gleiter 23 gegen die Innenseite der Heckscheibe 8 angedrückt.

Sobald der Benutzer der Ansicht ist, die Rollobahn 25 ist weit genug ausgefahren, um eine befriedigende Abschattung zu erzielen läßt der Benutzer den Schalter los und die Stromversorgung für den Getriebemotor 26 hört auf. Da der Getriebemotor 26 selbsthemmend ist, bleibt die Rollobahn 14 in der vom Benutzer gewählten Stellung, auch dann, wenn der Motorstrom ausgeschaltet ist.

Die vollständig ausgefahrene Stellung ist in den Figuren 1 bis 3 gezeigt.

Die vollständig ausgefahrene Stellung der Rollobahn 14 kann ebenfalls mit Anschlägen in den Führungsrohren 37, 38 festgelegt sein. Diese Anschläge befinden sich an dem der Heckscheibe 8 benachbarten Ende. Sie sind in der Figur nicht weiter veranschaulicht.

Durch diese Anschläge wird verhindert, dass die Führungsschlitten 39 und 41 aus den Führungsrohren 37 und 38 freikommen können.

Die elektrische Steuerung wird dadurch besonder einfach, denn es genügt, wenn zum vollständigen Ausfahren der Motorstrom lange genug eingeschaltet bleibt, bis die Schlitten 39 und 41 den Anschlag erreicht haben und eine weitere Bewegung blockiert ist.

Um ein unnötig langes Einschalten des Motorstroms zu verhindern, kann auch der bei einer Blockierung des Motors erhöhte Motorstrom erfasst werden und als Abschaltkriterium ausgewertet werden.

Das Einfahren der Rollobahn 14 geschieht, indem der Benutzer durch einen entsprechenden Schalter den Getriebemotor 25 mit einer umgekehrten Drehrichtung in Gang setzt. Bei dieser Drehrichtung drückt das formschlüssig mit den Schubgliedern 44 und 45 gekoppelte Zahnrad 29 die Schubglieder 45 und 44 in die Führungsrohre 37 und 38 zurück. Dementsprechend werden die Führungsschlitten 39 und 41 in den Führungsrohren 37 und 38 aus der dem Heckfenster 3 benachbarten Lage wegbewegt. Die Führungsschlitten 39 und 41 ziehen die Führungs- und Schubstangen 42 und 43 durch den Rolloschlitz 15 zurück in den Dachinnenraum 6 und bewegen sich ebenfalls in die Führungsrohre 37 und 38 hinein. Gleichzeitig wird die Rollobahn 14 durch die Wirkung der Schraubenfeder 19 auf der Wickelwelle 16 aufgewickelt.

In jeder Betriebsstellung der Rollobahn 14 wird die Rollobahn 14 im Zusammenwirken mit den über die Antriebseinrichtung 24 festgehaltenen Führungs- und Schubstangen 42, 43 und der Wickelwelle, die in Aufwickelrichtung federvorgespannt ist, gespannt gehalten.

Um eine einwandfreie Führung der Führungs- und Schubstangen 42, 43 zu erzielen, können zusätzlich in der Nähe des Rolloschlitzes 15 weitere Führungskanäle vorgesehen sein, durch die die Führungs- und Schubstangen 42 und 43 verlaufen.

Bei dem beschriebenen Ausführungsbeispiel wird die Vorder- oder Unterkante 21 der Rollobahn 14 über den Getriebemotor 25 betätigt, während die andere Kante mit dem Federmotor 19 verbunden ist. Die kinematische Umkehr ist ebenfalls möglich. In diesem Falle wird, was in den Figuren nicht gezeigt ist, die Wickelwelle 16 durch den Getriebemotor 25 angetrieben, während auf die Führungsschlitten 39 und 41 eine Feder wirkt, um diese Führungsschlitten 39 und 41 in jene Stellung vorzuspannen, in der sie der Fensteroberkante 7 am nächsten benachbart sind, d.h. in der die Führungs- und Schubstangen 42 und 43 ausgefahren sind. Die Federn für die beiden Führungsschlitten 37 und 39 können Zug- oder Druckfedern sein.

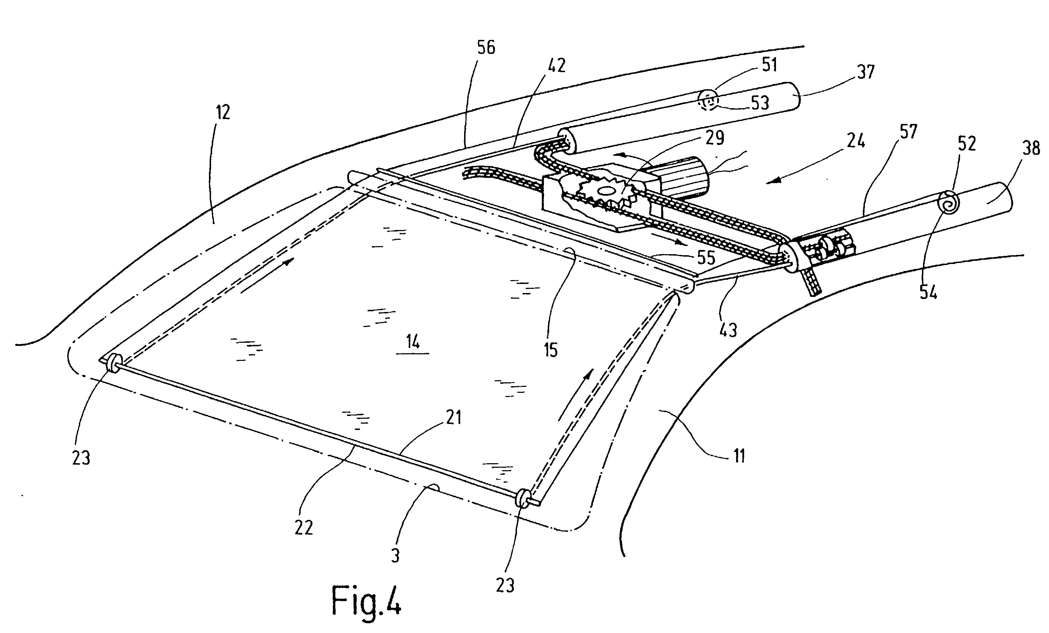

Wenn die Karosserie eine Gestalt hat, bei der der Dachinnenraum 6 zu stark gekrümmt ist, als dass er eine Wickelwelle 6 mit genügender Breite aufnehmen kann, kommt die Konstruktion gemäß Fig. 4 in Frage. Soweit bei dieser Konstruktion Bauelemente und Bauteile verwendet werden, die mit den zuvor beschriebenen Bauteilen konstruktions- oder im wesentlichen funktionsgleich sind, werden sie nicht mehr erneut beschrieben. Es wird statt dessen auf die oben stehende Beschreibung verwiesen.

Bei dem Ausführungsbeispiel nach Fig. 4 fehlt die Wickelwelle 16. Statt der Wickelwelle 16 sind zwei voneinander beabstandete Gurtbandscheiben 51 und 52 in dem Dachinnenraum 6 drehbar gelagert. Jeder Gurtband- Winkelscheibe 51, 52 ist eine Spiralfeder 53 bzw. 54 zugeordnet, durch die die jeweilige Wickelscheibe 51 und 52 in einer Drehrichtung vorgespannt ist.

Die Rollobahn 14 ist an ihrer Hinterkante 55, die bei dem vorigen Ausführungsbeispiel mit der Wickelwelle 19 verbunden ist, mit einem Versteifungsstab 55 versehen. An dem Versteifungsstab 55 greifen endseitig zwei Zugbänder 56 und 57 an, die wiederum an der zugehörigen Wickelscheibe 51 oder 52 verankert sind.

Im ausgefahrenen Zustand wird die Rollobahn 14 zwischen den ausgefahrenen Enden der Führungs- und Schubstangen 42 und 43 und den abgewickelten Zugbändern 56 und 57 gespannt gehalten. Die Zugbänder 56 und 57 werden mit Hilfe der Wickelscheiben 51, 52 und den zugehörigen Spiralfedern 53, 54 gespannt gehalten.

Beim Einfahren wickeln sich die beiden Zugbänder 56 und 57 auf die Wickelscheiben 51 und 52 auf. Die Rollobahn 14 hingegen bleibt in Längsrichtung auch im gänzlich eingefahrenen Zustand zwischen den Zugbändern 56 und 57 und den Führungs- und Schubstangen 42, 43 vollständig aufgespannt gehalten, so wie dies Fig. 4 für den ausgefahrenen Zustand zeigt.

Die beiden Wickelscheiben 51 und 52 sind deswegen in einem entsprechenden Abstand von dem Rolloschlitz 15 angeordnet, damit bei vollständig eingefahrener Rollobahn 14 die Verstärkungsstange 55 nicht an den Wickelscheiben 51 und 52 anstößt.

Bei den vorherigen Ausführungsbeispielen bestand die Rollobahn 14 aus einer dünnen Folie, die lediglich auf Zug beansprucht werden kann. Es sind die durch den Rolloschlitz 15 austretenden Führungs- und Schubstangen erforderlich.

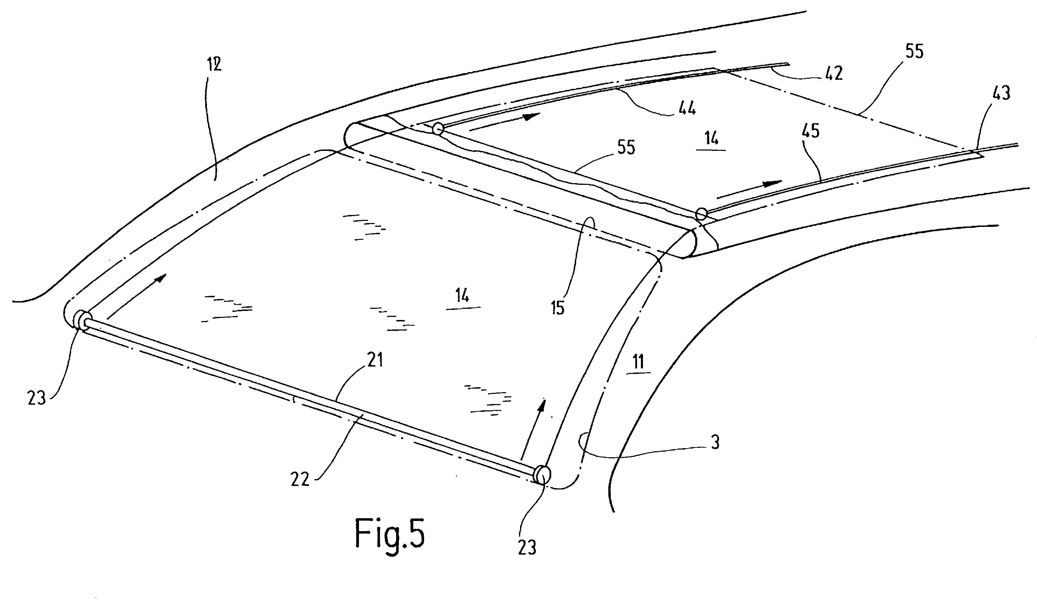

Fig. 5 zeigt eine Ausführungsform bei der die Rollobahn 14 selbst in sich im wesentlichen biegesteif ist. Es genügt in diesem Falle, wenn die linienförmigen Schubglieder 44 und 45 unmittelbar an der Hinterkante 55 der Rollobahn 14 angreifen. Der Antrieb der Schubglieder 44, 45 ist sinngemäß derselbe wie bei den zuvor erläuterten Ausführungsbeispielen.

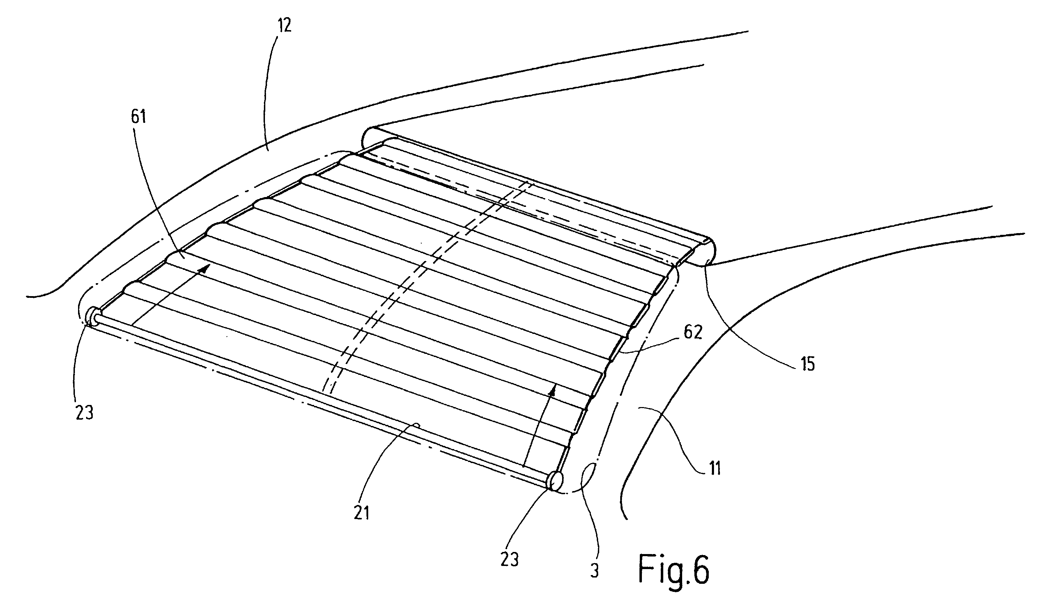

Wenn zu befürchten ist, dass die Rollobahn 14 im aufgespannten Zustand zu stark ballonartig durchhängt, kann sie gemäß Fig. 6 mit querverlaufenden Spriegeln 61 versehen sein, die sich parallel zu der Unterkante 21 erstrecken. Die Spriegel 61 sind in Fig. 6 auf der linken bzw. oberen Hälfe gezeigt.

Eine andere Möglichkeit die Rollobahn 14 zu gestalten besteht in der Verwendung von miteinander verhakten einzelnen Lamellen 62, ähnlich den Lamellen wie sei Rolladenpanzern zum Einsatz kommen. Diese Lamellen 62 sind Fig. 6 auf der rechten Seite gezeigt.

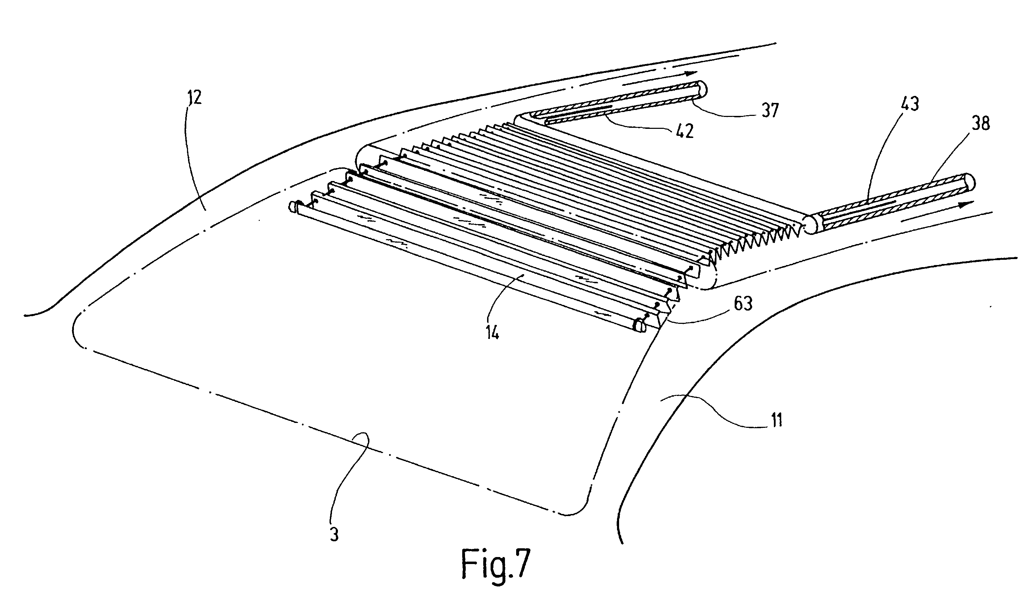

Schließlich kann gemäß Fig. 7 die Rollobahn 14 auch leporelloartig gefaltet sein. Die entstehenden Falten sind an den Enden gelocht und es führt durch die so entstandenen Löcher 63 die Führungs-und Schubstangen 42 bzw. 43 hindurch, wie er in Verbindung mit dem Ausführungsbeispiel nach den Figuren 1-3 erläutert ist.

Das Fensterrollo 13 ist oben in Verbindung mit einem Heckfenster und einem starr und unlösbar zu der Karosserie gehörenden Dach beschrieben. Es läßt sich auch für Heckfenster an Sportfahrzeugen mit Hardtop einsetze. die Fensterrollokonstruktion befindet sich in diesem Falle zu Gänze in dem Hardtop.

Des Weiteren ist das erfindungsgemäße Fensterrollo 13 auch an Heckfenstern einzusetzen, die sich in einer Heckklappe eines Kombi-PKW befinden. Da die Rollobahn 14 durch die biegeelastischen Führungs- und Schubstangen 42, 43 aufgespannt gehalten und getragen wird, kann das gezeigte Fensterrollo 13 auch im ausgefahrenen Zustand der Schwenkbewegung der Heckklappe folgen.

Auch Heckfenster von Hecktüren wie sie an Off-Road-Fahrzeugen zu finden sind, können mit dem erfindungsgemäßen Fensterrollo abgeschattet werden. Es genügt, wenn ein automatisches Einfahren der Rollobahn 14 erzwungen wird, sobald die Tür geöffnet wird.

Das erfindungsgemäße Fensterrollo 13 ist nicht auf Fenster beschränkt, bei denen das Dach in einem flachen Winkel in die Heckscheibe übergeht. Der Winkel zwischen der Heckscheibe und dem Dach kann sich auch einem rechten Winkel nähern. Der Rolloschlitz braucht lediglich einen genügenden Abstand von dem Heckfenster aufweist, damit kein allzu starkes Biegen der Führungs- und Schubstangen 42, 43 erzwungen werden muss.

Abgesehen von den Varianten in Verbindung mit Heckfenstern kommt die erfindungsgemäße Fensterrollokonstruktion auch als Ersatz für Sonnenblenden bei Frontscheiben oder für Seitenfenster in Frage. Dabei spielt es keine Rolle ob die Seitenfenster starr und fest in der Karosserie sitzen oder sich in Türen befinden.

Ein Kraftfahrzeug ist mit einem Sonnenschutzrollo 13 ausgerüstet, dessen wesentliche mechanische Teile in dem Dachinnenraum 6 oberhalb des Dachhimmels 5 untergebracht sind. Das Sonnenschutzrollo 13 ist führungsschienenfrei. Die Rollobahn 14 ist entweder selbst hinreichend biegesteif oder ihre Vorderkante 21 wird mit Hilfe von geführten Führungs- und Schubstangen 42, 43 getragen, derart dass ihre Vorder- oder Unterkante 21 an der betreffenden Scheibe 8 zur Anlage gehalten wird. Zum Betätigen, d.h. zum Einund Ausfahren der Rollobahn 14 ist ein Getriebemotor 25 vorgesehen.

## Patentansprüche

1. Kraftfahrzeug
mit einem formstabilen Dach (2), das nach außen von einer formstabilen Dachhaut (4) und nach innen von einem Himmel (5) begrenzet ist, zwischen denen einen Dachinnenraum (6) begrenzt ist,
mit einem an das Dach (2) angrenzenden Heckfenster(3),
mit einem Rolloschlitz (15), der sich in dem Dach (2) und neben dem Fenster (3) befindet und über den eine Verbindung von außen zu dem Dachinnenraum (6) besteht, mit einer biegsamen Rollobahn (14), die durch den Rolloschlitz (15) bewegbar und in den Dachinnenraum (6) zumindest teilweise zurückziehbar ist, und
mit einem in dem Dachinnenraum (6) untergebrachten Antriebssystem (16,19,24,53,54) für die Rollobahn (14), um die Rollobahn (14) zwischen der zurückgezogenen Position und einer Position hin und her zu bewegen, in der die Rollobahn (14) zumindest teilweise vor dem Fenster (3) verläuft,
wobei zu dem Antriebssystem (16,19,24,53,54) wenigstens ein Kraftantrieb (25), um die Rollobahn (14) fernbetätigt zu bewegen, sowie zwei federelastisch biegsame, verhältnismäßig steife Stangen (42,43) gehören, deren freie Enden mit einem Rand (21) der Rollobahn (14) verbunden sind und die aus dem Rolloschlitz (15) ausfahrbar sind, und
mit im Bereich der beim Ausfahren der Rollobahn (14) vorauseilenden Kante angeordneten Gleitern oder Rollen (23), die sich beim Ausfahren längs der Scheibe (8) des betreffenden Fensters (3) bewegen und eine kratzfreie Führung zu ermöglichen.

2. Sonnenschutzrollo für Kraftfahrzeuge, das in einem Dach (2) des Kraftfahrzeugs untergebracht ist und mit dem ein Heckfenster (3) des Kraftfahrzeugs abzuschatten ist, wobei sich über dem Heckfenster (3) ein Rolloschlitz (15) befindet, über den eine Verbindung von außen zu dem Dachinnenraum (6) besteht,
mit einer biegsamen Rollobahn (14), die durch den Rolloschlitz (15) bewegbar und in den Dachinnenraum (6) zumindest teilweise zurückziehbar ist,
mit einem in dem Dachinnenraum (6) untergebrachten Antriebssystem (16,19,24,53,54) für die Rollobahn (14), um die Rollobahn (14) zwischen der zurückgezogenen Position und einer Position hin und her zu bewegen, in der die Rollobahn (14) zumindest teilweise vor dem Fenster (3) verläuft,
wobei zu dem Antriebssystem (16,19,24,53,54) wenigstens ein Kraftantrieb (25), um die Rollobahn (14) fernbetätigt zu bewegen, sowie zwei federelastisch biegsame, verhältnismäßig steife Stangen (42,43) gehören, deren freie Enden mit einem Rand (21) der Rollobahn (14) verbunden sind und die aus dem Rolloschlitz (15) ausfahrbar sind, und
mit im Bereich der beim Ausfahren der Rollobahn (14) vorauseilenden Kante angeordneten Gleitern oder Rollen (23), die sich beim Ausfahren längs der Scheibe (8) des betreffenden Fensters (3) bewegen und eine kratzfreie Führung zu ermöglichen.

3. Vorrichtung nach den Ansprüchen 1 oder 2, **dadurch gekennzeichnet, dass** die Karosserie (1) des Kraftfahrzeugs einen Fahrgastraum bildet und das Fenster (3) ein Fenster für den Fahrgastraum ist.

4. Vorrichtung nach den Ansprüchen 1 oder 2, **dadurch gekennzeichnet, dass** das formstabile Dach (2) unlösbarer Bestandteil einer Fahrzeugkarosserie (1) ist.

5. Vorrichtung nach Anspruch 1, **dadurch gekennzeichnet, dass** das formstabile Dach (2) lösbar mit einer Fahrzeugkarosserie (1) verbunden ist.

6. Vorrichtung nach Anspruch 1, **dadurch gekennzeichnet, dass** der Dachhimmel (5) zumindest bereichsweise ein Formteil ist.

7. Vorrichtung nach Anspruch 1, **dadurch gekennzeichnet, dass** die Dachhaut (4) aus Blech besteht.

8. Vorrichtung nach Anspruch 1, **dadurch gekennzeichnet, dass** das Fenster (3) gegenüber dem Dach (2) unbewegbar ist.

9. Vorrichtung nach Anspruch 1, **dadurch gekennzeichnet, dass** das Fenster (3) gegenüber dem Dach (2) bewegbar ist.

10. Vorrichtung nach Anspruch 1, **dadurch gekennzeichnet, dass** der Rolloschlitz (15) eine Länge aufweist, die der Breite des Fensters (3) in jenem Bereich entspricht, der dem Dach (2) benachbart ist.

11. Vorrichtung nach den Ansprüchen 1 oder 2, **dadurch gekennzeichnet, dass** die Rollobahn (14) eine Breite aufweist, die der Breite des Fensters (3) in jenem Bereich entspricht, der dem Dach (2) benachbart ist.

12. Vorrichtung nach den Ansprüchen 1 oder 2, **dadurch gekennzeichnet, dass** die Rollobahn (14) in sich schubsteif ist.

13. Vorrichtung nach den Ansprüchen 1 oder 2, **dadurch gekennzeichnet, dass** die Rollobahn (14) aus einem Material besteht, das mit einem geringen Radius aufrollbar ist.

14. Vorrichtung nach den Ansprüchen 1 oder 2, **dadurch gekennzeichnet, dass** der Rollobahn (14) Spriegel (61) zugeordnet sind, die quer zu der Bewegungsrichtung verlaufen.

15. Vorrichtung nach den Ansprüchen 1 oder 2, **dadurch gekennzeichnet, dass** die Rollobahn (14) leporelloartig gefaltet ist.

16. Vorrichtung nach den Ansprüchen 1 oder 2, **dadurch gekennzeichnet, dass** die Rollobahn (14) aus Lamellen (62) besteht.

17. Vorrichtung nach den Ansprüchen 1 oder 2, **dadurch gekennzeichnet, dass** die Rollobahn (14) an ihrer beim Ausfahren vorauseilenden Kante (21) mit einem flexiblen Versteifungsstab (22) versehen ist.

18. Vorrichtung nach den Ansprüchen 1 oder 2, **dadurch gekennzeichnet, dass** die Rollobahn (14) an ihrer beim Ausfahren nacheilenden Kante (55) mit einem flexiblen Versteifungsstab versehen ist.

19. Vorrichtung nach den Ansprüchen 17 oder 18, **dadurch gekennzeichnet, dass** der Versteifungsstab (22) die Länge der Kante (21,55) aufweist.

20. Vorrichtung nach den Ansprüchen 1 oder 2, **dadurch gekennzeichnet, dass** die Rollobahn (14) einen rechteckigen Zuschnitt aufweist.

21. Vorrichtung nach den Ansprüchen 1 oder 2, **dadurch gekennzeichnet, dass** die Rollobahn (14) aus einem Material besteht, das eine Lichteinstrahlung in das Fahrzeuginnere vermindert.

22. Vorrichtung nach den Ansprüchen 1 oder 2, **dadurch gekennzeichnet, dass** das Antriebssystem (16,19,24,53,54) eine Wickelwelle (16) aufweist, die in dem Dachinnenraum (6) drehbar gelagert ist und an der mit einer Kante die Rollobahn (14) befestigt ist.

23. Vorrichtung nach den Ansprüchen 1 oder 2, **dadurch gekennzeichnet, dass** zu dem Antriebssystem (16,19,24,53,54) zwei Wickelscheiben (51,52) gehören, die in dem Dachinnenraum (6) mit Abstand voneinander drehbar gelagert sind und auf die band- oder seilförmige Zugmittel (56,57) aufwickelbar sind, die mit derjenigen Kante (55) der Rollobahn (14) verbunden sind, die beim Ausfahren der Rollobahn (14) nacheilt.

24. Vorrichtung nach den Ansprüchen 1 oder 2, **dadurch gekennzeichnet, dass** die Stangen (42,43) jeweils mit einem linienförmigen Schubglied (44,45) gekoppelt bzw. durch diesen gebildet sind.

25. Vorrichtung nach Anspruch 24, **dadurch gekennzeichnet, dass** das linienförmige Schubglied (44,45) zumindest an einem Ende mit einer Verzahnung versehen ist, mittels derer das linienförmige Schubglied (44,45) formschlüssig mit einem Zahnrad (29) eines Antriebsmotors (25) gekuppelt ist.

26. Vorrichtung nach den Ansprüchen 1 oder 2, **dadurch gekennzeichnet, dass** zu dem Antriebssystem (16,19,24,53,54) wenigstens eine Feder (19,53,54) gehört.

27. Vorrichtung nach den Ansprüchen 23 und 26, **dadurch gekennzeichnet, dass** die Feder (19,53,54) in Gestalt eines Federmotors mit der Wickelwelle (16) oder der Wickelscheibe (51,52) gekuppelt ist und die Wickelwelle (16) oder die Wickelscheibe (51,52) in Aufrollrichtung der Rollobahn (14) bzw. des Zugmittels (56,57) vorspannt.

28. Vorrichtung nach den Ansprüchen 24 und 26, **dadurch gekennzeichnet, dass** die Feder (19 53, 54) über das Schubglied und/oder die biegesteife Stange (42,43) mit der Rollobahn (14) verbunden ist und die Rollobahn (14) im Sinne des Ausfahrens aus dem Rolloschlitz (15) vorspannt.

29. Vorrichtung nach den Ansprüchen 24 und 26, **dadurch gekennzeichnet, dass** die Feder (19,53,54) über das Schubglied und/oder die biegesteife Stange (42,43) mit der Rollobahn (14) verbunden ist und die Rollobahn (14) im Sinne des Einfahrens in den Rolloschlitz (15) vorspannt.

30. Vorrichtung nach den Ansprüchen 1 oder 2, **dadurch gekennzeichnet, dass** der Kraftantrieb ein Elektromotor, vorzugsweise ein Getriebemotor (25) ist.

31. Vorrichtung nach den Ansprüchen 30 und 24, **dadurch gekennzeichnet, dass** der Getriebemotor (25) mit dem Schubglied (44,45) gekoppelt ist.

## Claims

1. Motor vehicle
with a dimensionally stable roof (2), which is bordered to the outside by a dimensionally stable roof seal (4) and to the inside by an inside roof lining (5), between which an internal roof space (6) is defined,
with a rear window (3) adjoining the roof (2),
with a roller blind slit (15), which is located in the roof (2) and next to the window (3) and via which a connection from outside to the internal roof space (6) is formed,
with a flexible roller blind (14), which is movable through the roller blind slit (15) and is at least partially retractable into the internal roof space (6), and
with a drive System (16, 19, 24, 53, 54) for the roller blind (14) housed in the internal roof space (6) to move the roller blind (14) back and forth between the retracted position and a position, in which the roller blind (14) runs at least partially in front of the window (3),
wherein the drive system (16, 19, 24, 53, 54) includes at least one mechanical drive (25) to move the roller blind (14) via remote control, and also two resiliently flexible relatively stiff rods (42,43), fche free ends of which are connected to an edge (21) of the roller blind (14) and which can be extended out of the roller blind slit (15), and
with slides or rolls (23), which are disposed in the region of the leading edge during extension of the roller blind (14) and which move during extension along the pane (8) of the respective window (3), permitting scratch-free guidance.

2. Shading roller blind for motor vehides, which is housed in a roof (2) of the vehicie and with which a rear window (3) of the vehicie is to be shaded, wherein a roller blind slit (15) is located above the rear window (3), via which a connection from outside to the internal roof space (6) is formed,
with a flexible roller blind (14), which is movable through the roller blind slit (15) and is at least partially retractable into the internal roof space (6), and
with a drive System (16,19,24,53,54) for the roller blind (14) housed in the internal roof space (6) to move the roller blind (14) back and forfch between the retracted position and a position, in which the roller blind (14) runs at least partially in front of the window (3),
wherein the drive system (16, 19, 24, 53, 54) includes at least one mechanical drive (25) to move the roller blind (14) via remote control, and also two resiliently flexible relatively stiff rods (42,43), the free ends of which are connected to an edge (21) of the roller blind (14) and which can be extended out of the roller blind slit (15), and
with slides or rolls (23), which are disposed in the region of the leading edge during extension of the roller blind (14) and which move during extension along the pane (8) of the respective window (3), permitting scratch-free guidance.

3. Arrangement according to Claim 1 or 2, **characterised in that** the body (1) of the motor vehicle forms a passenger compartment and the window (3) is a window for the passenger compartment.

4. Arrangement according to Claims 1 or 2, **characterised in that** the dimensionally stable roof (2) is an undetachable component of a vehicle body (1).

5. Arrangement according to Claim 1, **characterised in that** the dimensionally stable roof (2) is detachably connected to a vehicle body (1).

6. Arrangement according to Claim 1, **characterised in that** the inside roof lining (5) is a moulded part at least in sections.

7. Arrangement according to Claim 1, **characterised in that** the roof seal (4) is made of sheet metal.

8. Arrangement according to Claim 1, **characterised in that** the window (3) is immovable relative to the roof (2).

9. Arrangement according to Claim 1, **characterised in that** the window (3) is movable relative to the roof (2).

10. Arrangement according to Claim 1, **characterised in that** the roller blind slit (15) has a length, which corresponds to the width of the window (3) in the region adjacent to the roof (2).

11. Arrangement according to Claims 1 or 2, **characterised in that** the roller blind (14) has a width, which corresponds to the width of the window (3) in the region adjacent to the roof (2).

12. Arrangement according to Claims 1 or 2, **characterised in that** the roller blind (14) is inherently rigid to shear.

13. Arrangement according to Claims 1 or 2, **characterised in that** the roller blind (14) is made of a material, which may be rolled up to a small radius.

14. Arrangement according to Claims 1 or 2, **characterised in that** the roller blind (14) is provided with ribs (61), which run transversely to the direction of movement.

15. Arrangement according to Claims 1 or 2, **characterised in that** the roller blind (14) is folded in a concertina-like manner.

16. Arrangement according to Claims 1 or 2, **characterised in that** the roller blind (14) is made of slats (62).

17. Arrangement according to Claims 1 or 2, **characterised in that** the roller blind (14) is provided with a flexible reinforcing bar (22) on its leading edge (21) during extension.

18. Arrangement according to Claims 1 or 2, **characterised in that** the roller blind (14) is provided with a flexible reinforcing bar on its rear edge (55) during extension.

19. Arrangement according to Claims 17 or 18, **characterised in that** the reinforcing bar (22) has the length of the edge (21, 55).

20. Arrangement according to Claims 1 or 2, **characterised in that** the roller blind (14) has a rectangular shape.

21. Arrangement according to Claims 1 or 2, **characterised in that** the roller blind (14) is made of a material, which reduces the radiation of light into the interior of the vehicle.

22. Arrangement according to Claims 1 or 2, **characterised in that** the drive system (16, 19, 24, 53, 54) has a winding shaft (16), which is rotatably disposed in the internal roof space (6) and to which the roller blind (14) is fastened at one edge.

23. Arrangement according to Claims 1 or 2, **characterised in that** belonging to the drive system (16, 19, 24, 53, 54) are two winding pulleys (51, 52), which are rotatably disposed at a distance from one another in the internal roof space (6) and onto which can be wound the band- or rope-type pulling means (56, 57), which are connected to the edge (55) of the roller blind (14), which is to the rear during extension of the roller blind (14).

24. Arrangement according to Claims 1 or 2, **characterised in that** the rigid rods (42, 43) are respectively coupled to a linear pushing member (44, 45) or formed by this.

25. Arrangement according to Claim 24, **characterised in that** the linear pushing member (44, 45) is provided at least at one end with a toothed arrangement, by means of which the linear pushing member (44, 45) is positively coupled to a gear (29) of the drive motor (25).

26. Arrangement according to Claims 1 or 2, **characterised in that** at least one spring (19, 53, 54) belongs to the drive system (16, 19, 24, 53, 54).

27. Arrangement according to Claims 23 and 26, **characterised in that** the spring (19, 53, 54) is coupled in the form of a spring motor with the winding shaft (16) or the winding pulley (51, 52) and prestresses the winding shaft (16) or the winding pulley (51, 52) in the wind-up direction of the roller blind (14) or the pulling means (56, 57).

28. Arrangement according to Claims 24 and 26, **characterised in that** the spring (19, 53, 54) is connected to the roller blind (14) via the pushing member and/or the rigid rod (42, 43) and prestresses the roller blind (14) with respect to its extension out of the roller blind slit (15) .

29. Arrangement according to Claims 24 and 26, **characterised in that** the spring (19, 53, 54) is connected to the roller blind (14) via the pushing member and/or the rigid rod (42, 43) and prestresses the roller blind (14) with respect to its retraction into the roller blind slit (15) .

30. Arrangement according to Claims 1 or 2, **characterised in that** the mechanical drive is an electric motor, preferably a geared motor (25).

31. Arrangement according to Claims 30 and 24, **characterised in that** the geared motor (25) is coupled to the pushing member (44, 45).

## Revendications

1. Véhicule automobile
avec un toit (2) rigide qui est délimité côté extérieur par une couverture de toit (4) rigide et côté intérieur par un ciel de toit (5), entre lesquels est formée une chambre intérieure de toit (6),
avec une vitre arrière (3) qui est contiguë avec le toit (2),
avec une fente de store roulant (15) qui est aménagée dans le toit (2) près de la vitre (3) et forme une communication entre l'extérieur et la chambre intérieure de toit (6),
avec une bande store (14) flexible qui peut être déplacée au travers de la fente de store (15) et peut être rentrée au moins partiellement dans la chambre intérieure de toit (6), et
avec un mécanisme (16, 19, 24, 53, 54) d'entraînement de la bande store (14) logé dans la chambre intérieure de toit (6), pour déplacer la bande de store entre la position rentrée et une position dans laquelle ladite bande store (14) s'étend au moins partiellement devant la vitre (3) et vice-versa,
le mécanisme d'entraînement (16,19,24,53,54) comprenant au moins un moteur (25) pour déplacer la bande de store (14) d'une manière commandée à distance, ainsi que deux tiges élastiques relativement rigides (42, 43), dont les extrémités libres sont liées à un bord (21) de la bande de store (14) et qui peuvent sortir à travers la fente de store (15),
avec disposés dans la région du bord avant, vu dans le sens de sortie de la bande de store (14), des patins ou des galets (23) qui, lors du déploiement de la bande de store se déplacent le long de la vitre concernée et assurent un guidage sans rayure.

2. Store roulant de protection contre le soleil destiné à des véhicules automobiles, qui est logé dans un toit du véhicule et à l'aide duquel une lunette arrière (3) du véhicule peut être occultée, une fente de store roulant (15) qui forme une communication entre l'extérieur et la chambre intérieure de toit (6) étant prévue, comprenant
une bande store (14) flexible qui peut être déplacée au travers de la fente de store (15) et peut être rentrée au moins partiellement dans la chambre intérieure de toit (6),
un mécanisme (16, 19, 24, 53, 54) d'entraînement de la bande store (14) logé dans la chambre intérieure de toit pour déplacer la bande de store entre la position rentrée et une position dans laquelle la bande store (14) s'étend au moins partiellement devant la vitre (3) et vice-versa,
le mécanisme d'entraînement (16, 19, 24, 53, 54)comprenant au moins un moteur (25) pour déplacer la bande de store (14) de manière commandée à distance ainsi que deux tiges élastiques relativement rigides (42, 43), dont les extrémités libres sont liées à un bord (21) de la bande de store (14) et qui peuvent sortir à travers la fente de store (15),
et, disposés dans la région du bord avant, vu dans le sens de sortie de la bande de store (14), des patins ou des galets (23) qui lors du déroulement de la bande de store se déplacent le long de la vitre concernée et assurent un guidage sans rayure.

3. Dispositif selon la revendication 1 ou 2, **caractérisé par le fait que** la carrosserie (1) du véhicule forme un compartiment à passagers et que la vitre (3) est une vitre du compartiment à passagers.

4. Dispositif selon la revendication 1 ou 2, **caractérisé par le fait que** le toit (2) rigide fait partie intégrante d'une carrosserie (1) de véhicule.

5. Dispositif selon la revendication 1, **caractérisé par le fait que** le toit rigide (2) est lié de manière séparable à une carrosserie (1) de véhicule.

6. Dispositif selon la revendication 1, **caractérisé par le fait que** le ciel de toit (5), au moins localement, est un élément moulé.

7. Dispositif selon la revendication 1, **caractérisé par le fait que** la couverture de toit (4) est en tôle.

8. Dispositif selon la revendication 1, **caractérisé par le fait que** la vitre (3) est fixe par rapport au toit (2).

9. Dispositif selon la revendication 1, **caractérisé par le fait que** la vitre (3) est mobile par rapport au toit (2).

10. Dispositif selon la revendication 1, **caractérisé par le fait que** la fente de store (15) a une longueur qui correspond à la largeur de la vitre (3) dans sa portion voisine du toit (2).

11. Dispositif selon la revendication 1, **caractérisé par le fait que** la bande de store (14) a une longueur qui correspond à la largeur de la vitre (3) dans sa portion voisine du toit (2).

12. Dispositif selon la revendication 1 ou 2, **caractérisé par le fait que** la bande de store (14) est intrinsèquement non extensible.

13. Dispositif selon la revendication 1 ou 2, **caractérisé par le fait que** la bande de store (14) est en un matériau qui peut être enroulé avec un faible rayon.

14. Dispositif selon la revendication 1 ou 2, **caractérisé par le fait qu'**à la bande de store (14) sont associés des arceaux (61) qui s'étendent transversalement à la direction de déplacement.

15. Dispositif selon la revendication 1 ou 2, **caractérisé par le fait que** la bande de store (14) est pliée en accordéon.

16. Dispositif selon la revendication 1 ou 2, **caractérisé par le fait que** la bande de store (14) est formée de lamelles (62).

17. Dispositif selon la revendication 1 ou 2, **caractérisé par le fait que** la bande de store (14) au niveau de son bord avant (21), vu dans le sens de sortie, est pourvue d'une barre de rigidification (22) flexible.

18. Dispositif selon la revendication 1 ou 2, **caractérisé par le fait que** la bande de store (14) au niveau de son bord arrière (55), vu dans le sens de sortie, est pourvue d'une barre de rigidification flexible.

19. Dispositif selon la revendication 17 ou 18, **caractérisé par le fait que** la barre de rigidification (22) a la même longueur que le bord (21, 55).

20. Dispositif selon la revendication 1 ou 2, **caractérisé par le fait que** la bande de store (14) présente une forme rectangulaire.

21. Dispositif selon la revendication 1 ou 2, **caractérisé par le fait que** la bande de store (14) est en un matériau qui diminue l'entrée de lumière à l'intérieur du véhicule.

22. Dispositif selon la revendication 1 ou 2, **caractérisé par le fait que** le mécanisme d'entraînement (16, 19, 24, 53, 54) comprend un arbre d'enroulement (16) qui est monté tournant dans la chambre intérieure de toit (6) et auquel la bande de store (14) est fixée par un bord (21).

23. Dispositif selon la revendication 1 ou 2, **caractérisé par le fait que** le mécanisme d'entraînement (16, 19, 24, 53, 54) comprend deux poulies d'enroulement (51, 52) qui sont montées tournantes, espacées l'une de l'autre, dans la chambre intérieure de toit (6) et sur lesquelles s'enroulent des moyens de traction (56, 57) sous forme de sangles ou de câbles liés au bord arrière (55), vu dans le sens de sortie, de la bande de store (14).

24. Dispositif selon la revendication 1 ou 2, **caractérisé par le fait que** les tiges (42, 43) sont couplées chacune à un organe de poussée (44, 45) linéaire ou sont formées par un tel organe.

25. Dispositif selon la revendication 24, **caractérisé par le fait que** l'organe de poussée (44, 45) linéaire, à une extrémité au moins, est pourvu d'une denture par l'intermédiaire de laquelle l'organe de poussée (44, 45) linéaire est couplé avec complémentarité de formes à une roue dentée (29) d'un moteur d'entraînement (25).

26. Dispositif selon la revendication 1 ou 2, **caractérisé par le fait que** le mécanisme d'entraînement (16, 19, 24, 53, 54) comprend au moins un ressort.

27. Dispositif selon les revendications 23 et 26, **caractérisé par le fait que** le ressort (19, 53, 54) conformé en moteur à ressort est couplé à l'arbre d'enroulement (16) ou à la poulie d'enroulement (51, 52) et précontraint l'arbre d'enroulement (16) ou à la poulie d'enroulement (51, 52) dans le sens de l'enroulement de la bande de store (14) ou du moyen de traction (56, 57).

28. Dispositif selon les revendications 24 et 26, **caractérisé par le fait que** le ressort (19, 53, 54) est lié à la bande de store (14) par l'intermédiaire de l'organe de poussée et/ou de la tige rigide (42, 43) et précontraint la bande de store (14) dans le sens de la sortie hors de la fente de store (15).

29. Dispositif selon les revendications 24 et 26, **caractérisé par le fait que** le ressort (19, 53, 54) est lié à la bande de store (14) par l'intermédiaire de l'organe de poussée et/ou de la tringle rigide (42, 43) et précontraint la bande de store (14) dans le sens de la rentrée dans la fente de store (15).

30. Dispositif selon la revendication 1 ou 2, **caractérisé par le fait que** le moyen d'entraînement est un moiteur électrique, de préférence un moto-réducteur (25).

31. Dispositif selon les revendications 30 et 24, **caractérisé par le fait que** le moto-réducteur (25) est couplé à l'organe de poussée (44, 45).
